# EUROPEAN PATENT SPECIFICATION

(11) **EP 0 549 661 B1**
(45) Date of publication and mention of the grant of the patent: **18.02.1998**
(21) Application number: 91916699.1
(22) Date of filing: 17.09.1991
(51) Int. Cl.: A61M 37/00

(54) **INTERDENTAL FOAM BRUSH**
INTERDENTALE BÜRSTE AUS SCHAUMSTOFF
BROSSE INTERDENTAIRE EN MOUSSE

(30) Priority: 21.09.1990 US 586067; 01.07.1991 US 724129
(43) Date of publication of application: 07.07.1993
(73) Proprietor: THE GILLETTE COMPANY, Boston, Massachusetts 02199 (US)
(72) Inventor: KAMINSKI, John, A., Newark, CA 94560 (US); TSENG, Mingchih, M., Hingham, MA 02043 (US); HART, Adrian, Palo Alto, CA 94031 (US)
(74) Representative: Baillie, Iain Cameron
(86) International application number: US9106715
(87) International publication number: WO9204935

(56) References cited:
- US-A- 982 232
- US-A- 2 218 738
- US-A- 2 555 858
- US-A- 3 018 778
- US-A- 3 228 398
- US-A- 3 724 018
- US-A- 3 871 375
- US-A- 3 927 435
- US-A- 4 150 045
- US-A- 4 576 190
- US-A- 4 628 564

## Description

The present invention relates to interdental brush devices for oral care, and more particularly to a brush of the type in which a disposable brush element is retained on handle by a removable cap member.

A great number of devices have been developed for the cleaning of teeth and massaging of the gums. Typically, they comprise brushes which are retained on a handle by a removable cap member. An example of such a brush and handle may be found in U.S. Patent 4,780,923 (Schultheiss). In the conventional art such as Schultheiss, the brush is formed by nylon bristles captured between and extending radially from a pair of twisted metal wires which form a stem. The bristles are used to rub or wipe perpendicularly across the gum and tooth surfaces for cleaning the same. A commercial example of such a conventional brush is the interdental brush manufactured by Oral B laboratories of Redwood City, California, which is available in both a cylindrical and a tapered shape.

In the United States, most users become acquainted with interdental brushing after periodontal surgery. Most patients receive specific instructions on use after periodontal surgery, primarily to assure that surgical areas remain free of germs. Periodontists typically recommend a treatment using the existing nylon bristle brush. However, although such brushes satisfactorily perform their cleaning role, many patients are reluctant to use the brushes as instructed for fear of pain from the bristles rubbing against their sore mouths. A need therefore exists for an interdental brush which does not have bristles.

It is an object of the present invention to provide an interdental brush which can be satisfactorily used for interdental cleaning, but without the use of cleaning bristles.

It is a further object of the present invention to provide an interdental brush formed of a foam material.

It is yet a further object of the invention to provide a method of manufacturing an interdental brush having a brush member formed of an open cell foam material adhered onto an elongate stem.

U.S. Patent 982,232 is concerned with a swab mounted on a handle and retained by a barb. That portion of the swab extending forwardly of the barb is unsupported.

According to the present invention there is provided an interdental foam brush including an elongated stem and a brush member supported by said stem, said stem having an annular boss and said brush member being formed of an open cell foam material surrounding said stem and extending over and along a substantial portion thereof, characterized in that the annular boss is located between and spaced from the ends of said stem, and in that said boss is encased within the foam brush to provide a support therefor to impede movement of said foam brush relative to the stem member during use.

The stem extends beyond the bush member by a distance sufficient to form a handle.

The foam material may comprises polyurethane or polyethylene, and preferably 60 PPI polyurethane.

The elongate stem may be molded from a plastic which may be a polycarbonate, a nylon, a polyester such as Kodar (an Eastman chemical trademark), or a polyacetal such as Delrin (a Dupont trademark).

The brush may be made by placing the stem in a mold having a desired shape for the brush member, injecting a foam mixture into a mold to form the brushes, and cutting the stem to a desired length. The foam mixture may be foamable hydrophilic polyurethane prepolymer (a derivative of toluene diisocyante), a mixture of polyols and isocyanates, or a foamable elastomer. The stem must have a surface which will bond with the foam composition.

The brush may be formed by a method including shaping layers of foam material and laminating two shaped layers of foam material onto a stem.

The brush member may be tapered towards its end, and is preferably substantially cone shaped.

A more complete appreciation of the invention and many of the attendant advantages thereof will be readily obtained as the same becomes better understood by reference to the following detailed description when considered in connection with the accompanying drawings, wherein:
Figure 1 is a side view of a stem according to an embodiment of the invention;
Figure 2 is a side view of a brush according to the embodiment of Figure 1;
Figure 3 is an end view, as seen from the base of the stem, of the brush according to the embodiment of Figure 1;
Figure 4 is a schematic illustration of a step in a molding operation for producing the brush of Figure 1;
Figure 5 is a side view of a brush according to another embodiment of the invention; and
Figure 6 shows a variant of the embodiment of Figure 5.

Preferred embodiments of the invention will now be described with reference to the accompanying drawings, in which the same reference numerals will be used to designate the same, or corresponding, elements throughout the several views.

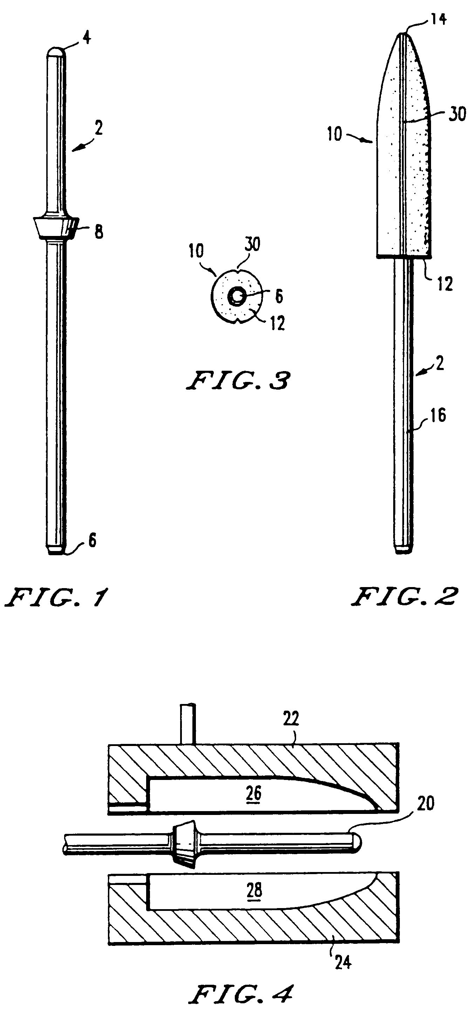

Referring to Figure 1, there is shown an elongate stem 2. The stem is formed of a plastic material and is preferably molded using a conventional injection molding process. The preferred material for the stem is Delrin (a DuPont trademark), although other materials can be used which provide stiffness with good flexibility. Alternative materials include polycarbonates, nylons, polyesters, or polyacetals.

The preferable polyacetal material is Delrin II, 500 grade.

A leading end 4 of the stem is preferably spherical while a base end 6 of the stem is preferably chamfered. The stem is formed with an annular boss 8 at a mid-portion thereof, i.e, positioned to be completely enclosed in the foam and positioned to be nearer the base end 12 thereof.

A brush 10 is adhered onto the stem 2, as seen in Figure 2. The term "adhered", as used herein, is defined to connote that the foam be chemically or physically bonded to at least a portion of the stem surface so that the foam will remain in place on (not sliding along) the stem surface during use. Chemically inert or non-reactive smooth stem surfaces can be prepared to facilitate chemical and/or physical bonding with the foam by physical abrasion, treatment to provide chemically reactive groups on the surface, or combinations thereof. Surface treatments which increase chemical reactivity with polyurethane foams, for example, include treatments with corona discharge, chemical oxidants, and gas plasmas.

The brush is formed of an open cell foam material, the open cell nature of the material assuring that the brush surface has cavities to receive and retain solids which are removed from gum, gingiva and tooth surfaces during rubbing application of the foam to these surfaces, and the foam material will absorb water or other substances, and will completely dry after use. The preferred material for the foam is a soft, at least 80 PPI polyurethane, although smaller or larger cell sizes can be used depending upon whether an abrasive feel or a smooth feel is required, or larger or smaller surface cavities are required. Other possible foam materials include 10, 20, 30 or 60 PPI polyurethane or HZ polyethylene.

As seen in Figure 2, the brush 10 has a base end 12 at a mid portion of the stem, which base end 12 is positioned closer to the base end 6 of the stem than is the boss 8, so that the brush surrounds and covers the boss. The brush extends to a distal end 14 thereof which covers the leading end 4 of the stem. In the preferred embodiment, the brush is tapered and is substantially cone or bullet shaped. However, it may be appreciated that other shapes are possible, including cone shapes having circumferential corrugations, bullet shapes having circumferential corrugations, or any of the above shapes having longitudinal ribs.

The soft appearing foam will have greater aesthetic appeal to the user, who will therefore be less reluctant to use the brush as instructed to remove plaque from interproximal areas and below the gum line.

A further advantage of the open cell foam construction of the brush of the present invention is that it is possible to retain therein gels or other medicaments which are to be applied to the tooth and gum surfaces during use.

The brush according to the present invention may be used in the same manner as conventional interdental brushes. Prior to use, the tail end 16 of the stem which extends beyond the brush can be inserted and clamped into a conventional handle such as that of U.S. Patent 4,780,923. Subsequently, the brush is applied to the interdental area. The boss 8 forms a stabilizing support for helping to maintain the longitudinal position of the brush on the stem during use. Moreover, the spherical tip of the stem eliminates sharp edges which could pierce the brush or be painful to a user.

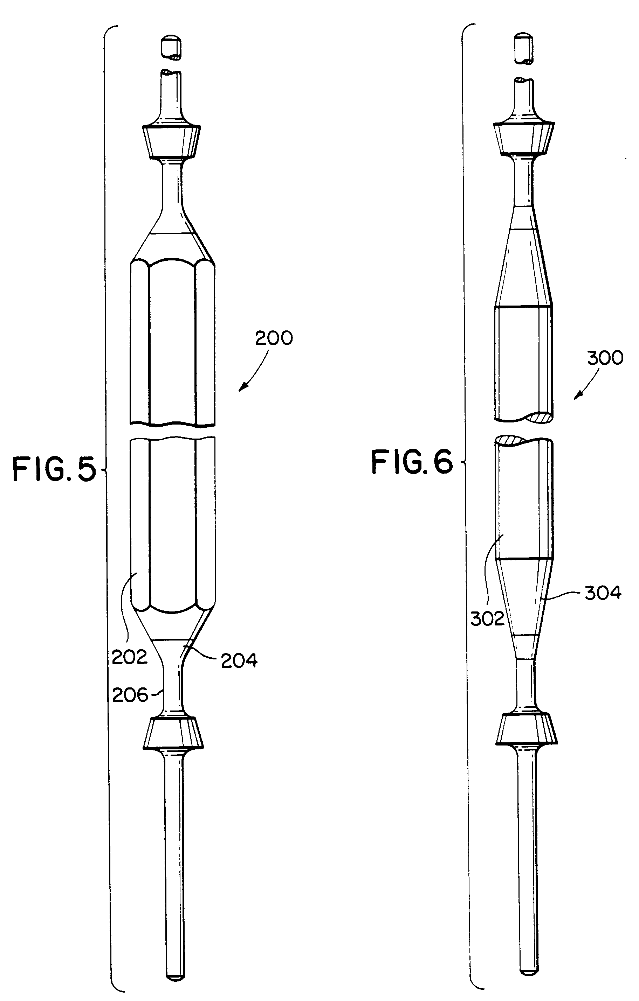

The brush can be molded onto the stem in the manner shown in Figure 4. There, a stem precursor 20, which has an extended base end, is positioned between two mold halves 22 and 24, which are subsequently closed. The mold halves have recesses 26 and 28 which together define a mold volume having a shape corresponding to the desired shape of the brush. To form the brush, the foam material may be dispensed into mold cavities using a dispensing machine with distributing nozzles before the closing of the mold; or the foam material may be injected in a conventional manner following the closing of the mold. The base end of the stem precursor is then cut to appropriate length to form the stem.

Alternatively, the brush may be formed by two foam layers which are cut to the desired shape and laminated onto the stem. Lamination can be via a known adhesive, or by flame adhesion. In this case, the joint lines 30 of the two laminated halves will be visible as recesses.

Non-limiting dimensions for a preferred embodiment of the brush are:
stem length 2.95 cm (1.163 inches),
stem diameter 0.088 cm (0.035 inches),
brush length 1.27 cm (0.50 inches),
maximum brush diameter 0.318 cm (0.125 inches)
boss axial length 0.127 cm (0.050 inches)
boss maximum diameter 0.254 cm (0.10 inches)
distance from leading end of stem to boss 0.99 cm (0.39 inches)

Another embodiment, which may be referred to as a "toothpick", is shown in Figure 5. There, the stem is not clamped onto a separate handle for use. Instead, the stem 200 is radially enlarged at a central portion thereof to form a handle 202, so that the brush can be handled like a toothpick and used in a manner similar to a toothpick. In the embodiment of Figure 5, the handle 202 of the stem 200 is hexagonal in section. The handle 202 terminates at conical ends 204 which taper at a 30° angle to merge with the smaller diameter portion 206. Portion 206 of the stem is identical to the part of the stem of the first embodiment which is covered by the brush member. Although not shown in Figure 5, a brush member is adhered onto the portion 206 in the same way as described above.

As may be seen from Figure 5, the opposite longitudinal ends of the stem 200 of this embodiment are identical, so that two brush members are formed at longitudinally opposite ends thereof. The ends may be alternated during use in the same way that one might alternate the ends of a toothpick.

In a non-limiting embodiment, the portion 206 of the stem has a diameter of 0.762 cm (0.30 inches) while the hexagonal handle 202 has a maximum diameter of 0.318 cm (0.125 inches) and the stem has an overall length of 6.99 cm (2.75 inches).

The variant of Figure 6 is identical to that of Figure 5, except that the handle 302 of the stem 300 is circular and has conical ends 304 which taper at an angle of 15°.

## Claims

1. An interdental foam brush including an elongated stem (2) and a brush member (10) supported by said stem, said stem having an annular boss (8) and said brush member being formed of an open cell foam material surrounding said stem and extending over and along a substantial portion thereof said boss (8) being encased within the foam brush (10) to provide a support therefor to impede movement of said foam brush relative to the stem member during use, characterized in that the annular boss (8) is located between and spaced from the ends of said stem.

2. An interdental foam brush according to claim 1, characterized in that the brush member (10) extends from a mid-portion of said stem (2) to a leading end thereof (4).

3. An interdental foam brush according to claim 2, characterized in that the foam brush surface converges from an outer diameter adjacent the boss (8) to a diameter providing a thin covering on the leading end (4) of the stem (2).

4. An interdental foam brush according to claim 3, characterized in that said brush member (10) is tapered toward the leading end (4) of said stem (2).

5. An interdental foam brush according to claim 4, characterized in that the brush member (10) is substantially cone shaped.

6. An interdental foam brush according to any proceeding claim, characterized in that the stem (2) is formed of a molded plastic selected from the group consisting of polycarbonates, nylons, polyesters, and polyacetals.

7. An interdental foam brush according to any preceding claim, characterized in that the foam material is polyurethane or polyethylene.

8. An interdental foam brush according to claim 1, characterized in that the foam brush (10) is molded on to the stem (2).

9. An interdental foam brush according to claim 1, characterized in that the foam brush comprises cooperating layers laminated on to the stem.

10. An interdental brush according to any preceding claim, characterized in that a pharmaceutically effective amount of at least one agent for treating the gums or teeth is applied to the brush in the form of a coating or gel.

## Patentansprüche

1. Interdentale Bürste aus Schaumstoff, mit einem elongierten Schaft (2) und einem von dem genannten Schaft getragenen Bürstenelement (10), wobei der genannte Schaft einen runden Vorsprung (8) aufweist, und wobei das genannte Bürstenelement aus einem offenzelligen Schaumstoff gebildet wird, der den genannten Schaft umgibt und sich über und entlang eines wesentlichen Teilstücks dessen erstreckt, wobei der genannte Vorsprung (8) in der Bürste (10) aus Schaumstoff eingeschlossen ist, um diese zu stützen, so daß die Bewegung der genannten Schaumstoffbürste im Verhältnis zu dem genannten Schaftelement im Einsatz eingeschränkt wird, dadurch gekennzeichnet, daß sich der genannte runde Vorsprung (8) zwischen den Enden des genannten Schaftes befindet und zu diesen mit einem Zwischenabstand angeordnet ist.

2. Interdentale Bürste aus Schaumstoff nach Anspruch 1, dadurch gekennzeichnet, daß sich das Bürstenelement (10) von einem Mittelteil des genannten Schaftes (2) zu einem vorderen Ende dessen (4) erstreckt.

3. Interdentale Bürste aus Schaumstoff nach Anspruch 2, dadurch gekennzeichnet, daß die Oberfläche der Bürste aus Schaumstoff von einem äußeren Durchmesser angrenzend an den Vorsprung (8) zu einem Durchmesser konvergiert, der an dem vorderen Ende (4) des Schaftes (2) einen dünnen Überzug vorsieht.

4. Interdentale Bürste aus Schaumstoff nach Anspruch 3, dadurch gekennzeichnet, daß das genannte Bürstenelement eine Konizität in Richtung des vorderen Endes (4) des genannten Schaftes (2) aufweist.

5. Interdentale Bürste aus Schaumstoff nach Anspruch 4, dadurch gekennzeichnet, daß das genannte Bürstenelement (10) im wesentlichen konusförmig ist.

6. Interdentale Bürste aus Schaumstoff nach einem der vorstehenden Ansprüche, dadurch gekennzeichnet, daß der genannte Schaft (2) aus einem Preßkunststoff hergestellt wird, der aus der Gruppe ausgewählt wird, die Polycarbonate, Nylonstoffe, Polyester und Polyacetale umfaßt.

7. Interdentale Bürste aus Schaumstoff nach einem der vorstehenden Ansprüche, dadurch gekennzeichnet, daß es sich bei dem genannten Schaumstoff um Polyurethan oder Polyethylen handelt.

8. Interdentale Bürste aus Schaumstoff nach Anspruch 1, dadurch gekennzeichnet, daß die genannte Schaumstoffbürste (10) an den Schaft (2) angeformt ist.

9. Interdentale Bürste aus Schaumstoff nach Anspruch 1, dadurch gekennzeichnet, daß die genannte Schaumstoffbürste zusammenwirkende Schichten umfaßt, die an den Schaft laminiert sind.

10. Interdentale Bürste aus Schaumstoff nach einem der vorstehenden Ansprüche, dadurch gekennzeichnet, daß in Form eines Überzugs oder eines Gels eine medizinisch wirksame Menge mindestens eines Mittels zur Behandlung des Zahnfleischs oder der Zähne auf die Bürste aufgetragen wird.

## Revendications

1. Brosse interdentaire de mousse, comprenant une tige allongée (2) et un organe (10) de brosse supporté par la tige, la tige ayant une saillie annulaire (8) et l'organe de brosse étant formé d'un matériau de mousse à cellules ouvertes qui entoure la tige et s'étend sur une partie importante de celle-ci et le long de celle-ci, la saillie (8) étant entourée par la brosse (10) de mousse afin qu'elle forme un support pour celle-ci et empêche le déplacement de la brosse de mousse par rapport à la tige pendant l'utilisation, caractérisée en ce que la saillie annulaire (8) est disposée entre les extrémités de la tige et à distance de ces extrémités.

2. Brosse interdentaire de mousse selon la revendication 1, caractérisée en ce que l'organe à brosse (10) s'étend d'une partie médiane de la tige (2) vers une extrémité avant de celle-ci (4).

3. Brosse interdentaire de mousse selon la revendication 2, caractérisée en ce que la surface de la brosse de mousse converge d'un diamètre externe adjacent à la saillie (8) vers un diamètre d'un recouvrement mince placé à l'extrémité avant (4) de la tige (2).

4. Brosse interdentaire de mousse selon la revendication 3, caractérisée en ce que l'organe de brosse (10) a une dimension qui diminue progressivement vers l'extrémité avant (4) de la tige (2).

5. Brosse interdentaire de mousse selon la revendication 4, caractérisée en ce que l'organe de brosse (10) a pratiquement une forme de cône.

6. Brosse interdentaire de mousse selon l'une quelconque des revendications précédentes, caractérisée en ce que la tige (2) est formée d'une matière plastique moulée choisie dans le groupe constitué par les polycarbonates, les "Nylon", les polyesters et les polyacétates.

7. Brosse interdentaire de mousse selon l'une quelconque des revendications précédentes, caractérisée en ce que le matériau de la mousse est un polyuréthanne ou un polyéthylène.

8. Brosse interdentaire de mousse selon la revendication 1, caractérisée en ce que la brosse de mousse (10) est moulée sur la tige (2).

9. Brosse interdentaire de mousse selon la revendication 1, caractérisée en ce que la brosse de mousse comporte des couches coopérantes empilées sur la tige.

10. Brosse interdentaire selon l'une quelconque des revendications précédentes, caractérisée en ce qu'une quantité pharmaceutiquement efficace d'au moins un agent de traitement des gencives ou des dents est appliquée à la brosse sous forme d'un revêtement ou d'un gel.
